(19) Europäisches Patentamt
European Patent Office
Office européen des brevets

(11) **EP 4 521 652 A1**

(12) **EUROPEAN PATENT APPLICATION**

(43) Date of publication:
**12.03.2025 Bulletin 2025/11**

(21) Application number: **23195996.6**

(22) Date of filing: **07.09.2023**

(51) International Patent Classification (IPC):
**H04B 7/06** (2006.01)     **H04W 72/50** (2023.01)
**H04W 72/543** (2023.01)

(52) Cooperative Patent Classification (CPC):
**H04B 7/06952; H04W 72/046; H04W 72/535;
H04W 72/543**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Nokia Solutions and Networks Oy
02610 Espoo (FI)**

(72) Inventors:
- **MAGGI, Lorenzo**
  **Paris (FR)**
- **GORANTLA, Bala Venkata Ramulu**
  **Bangalore (IN)**
- **KALYANASUNDARAM, Suresh**
  **Bangalore (IN)**
- **GULATI, Shalini**
  **Bangalore (IN)**

(74) Representative: **Nokia EPO representatives
Nokia Technologies Oy
Karakaari 7
02610 Espoo (FI)**

(54) **JOINT USER SCHEDULING AND ANALOG BEAM CHOICE IN HYBRID BEAMFORMING**

(57)     The present invention provides apparatuses, methods, computer programs, computer program products and computer-readable media for joint user scheduling and analog beam choice in hybrid beamforming. The apparatus for use in a base station, comprises at least one processor; and at least one memory storing instructions that, when executed by the at least one processor, cause the apparatus at least to perform computing a maximum number of physical resource blocks, PRBs, that can be assigned to a specific user using a specific beam out of a plurality of users and a plurality of beams, based on a spectral efficiency and a number of bits in a buffer of the base station to be sent to the user; calculating, using RT-heuristic, a maximum value of a first beam proportional fair, PF, metric and the corresponding beam and users by sorting users based on the spectral efficiency and a throughput achieved by the specific user in the past; calculating, using Pmax-heuristic, a maximum value of a second beam proportional fair, PF, metric and the corresponding beam and users by sorting users based on the maximum number of PRBs that can be assigned to the specific user, the spectral efficiency and the throughput achieved by the specific user in the past; selecting one of the RT-heuristic or Pmax-heuristic; and performing beam and user scheduling based on information regarding the corresponding beam and users according to the selected RT-heuristic or Pmax-heuristic.

Fig. 6

## Description

### Field of the invention

Various example embodiments relate to apparatuses, methods, systems, computer programs, computer program products and computer-readable media for joint user scheduling and analog beam choice in hybrid beamforming.

### Abbreviations

| | |
|---|---|
| BS | Base Station |
| CQI | Channel Quality Indicator |
| HBF | Hybrid Beamforming |
| LNA | Low Noise Amplifier |
| mMIMO | massive Multiple Input Multiple Output |
| MU-MIMO | Multi User Multiple Input Multiple Output |
| OLLA | Outer Loop Link Adaptation |
| PA | Power Amplifier |
| PF | Proportional Fair |
| PRB | Physical Resource Block |
| RE | Resource Element |
| RF | Radio Frequency |
| RRM | Radio Resource Management |
| SE | Spectral Efficiency |
| SoC | System-on-chip |
| SU-MIMO | Single User Multiple Input Multiple Output |
| UMa | Urban Macro |
| UMi | Urban Micro |

### Background

The present invention generally relates to joint user scheduling and analog beam choice in hybrid beamforming.
Adaptive antenna mMIMO systems enable improved user experience, larger capacity and coverage. This becomes possible with use of higher number of antenna elements and associated number of RF chains. However, this also results in higher system complexity and cost. The required number of RF chains and hence weight and cost can be significantly reduced if a hybrid beamforming solution is used instead. Unlike digital beamforming, hybrid beamforming solution uses a combination of digital and analog beamforming. Analog beamforming requires use of a single analog beam in a slot thus constraining the users that can be scheduled in a slot.

### Summary

Various examples of embodiments described in the subject disclosure provide certain advantages, for example in the form of one or more improvements that are either explicitly described herein or otherwise apparent to a person skilled in the art from the subject disclosure. Hence, at least some examples of embodiments of the subject disclosure aim to provide (or otherwise contribute to) at least part of the aforementioned advantages and improvements.
Various aspects of examples of embodiments of the subject disclosure are set forth in the claims and pertain to methods, apparatuses and computer program products in the context of joint user scheduling and analog beam choice in hybrid beamforming.
At least some of aforementioned advantages and improvements may be achieved through the methods, apparatuses and non-transitory storage media as specified in the claims. Further advantages and improvements may be achieved through the methods, apparatuses and non-transitory storage media set forth in respective dependent claims.
According to an aspect of various example embodiments there is provided an apparatus for use in a base station, comprising

at least one processor; and
at least one memory storing instructions that, when executed by the at least one processor, cause the apparatus at least to perform:

computing a maximum number of physical resource blocks, PRBs, that can be assigned to a specific user using a specific beam out of a plurality of users and a plurality of beams, based on a spectral efficiency and a number of bits in a buffer of the base station to be sent to the user;

calculating, using RT-heuristic, a maximum value of a first beam proportional fair, PF, metric and the corresponding beam and users by sorting users based on the spectral efficiency and a throughput achieved by the specific user in the past;

calculating, using Pmax-heuristic, a maximum value of a second beam proportional fair, PF, metric and the corresponding beam and users by sorting users based on the maximum number of PRBs that can be assigned to the specific user, the spectral efficiency and the throughput achieved by the specific user in the past;

selecting one of the RT-heuristic or Pmax-heuristic; and

performing beam and user scheduling based on information regarding the corresponding beam and users according to the selected RT-heuristic or Pmax-heuristic.

According to another aspect of various example embodiments there is provided an apparatus for use in a base station, comprising:

at least one processor; and

at least one memory storing instructions that, when executed by the at least one processor, cause the apparatus at least to perform:

computing a maximum number of physical resource blocks, PRBs, that can be assigned to a specific user using a specific beam out of a plurality of users and a plurality of beams, based on a spectral efficiency and a number of bits in a buffer of the base station to be sent to the user;

calculating a beam proportional fair, PF, metric and the corresponding beam and users by sorting users based on at least the spectral efficiency and the throughput achieved by the specific user in the past; and

performing beam and user scheduling based on information regarding the corresponding beam and users according to a maximum of the beam PF metric.

According to another aspect of various example embodiments there is provided an apparatus for use in a base station, comprising:

means for computing a maximum number of physical resource blocks, PRBs, that can be assigned to a specific user using a specific beam out of a plurality of users and a plurality of beams, based on a spectral efficiency and a number of bits in a buffer of the base station to be sent to the user;

means for calculating, using RT-heuristic, a maximum value of a first beam proportional fair, PF, metric and the corresponding beam and users by sorting users based on the spectral efficiency and a throughput achieved by the specific user in the past;

means for calculating, using Pmax-heuristic, a maximum value of a second beam proportional fair, PF, metric and the corresponding beam and users by sorting users based on the maximum number of PRBs that can be assigned to the specific user, the spectral efficiency and the throughput achieved by the specific user in the past;

means for selecting one of the RT-heuristic or Pmax-heuristic; and

means for performing beam and user scheduling based on information regarding the corresponding beam and users according to the selected RT-heuristic or Pmax-heuristic.

According to another aspect of various example embodiments there is provided an apparatus for use in a base station, comprising:

means for computing a maximum number of physical resource blocks, PRBs, that can be assigned to a specific user using a specific beam out of a plurality of users and a plurality of beams, based on a spectral efficiency and a number of bits in a buffer of the base station to be sent to the user;

means for calculating a beam proportional fair, PF, metric and the corresponding beam and users by sorting users based on at least the spectral efficiency and the throughput achieved by the specific user in the past; and

means for performing beam and user scheduling based on information regarding the corresponding beam and users according to a maximum of the beam PF metric.

According to another aspect of various example embodiments there is provided a method for use in a base station, comprising:

computing a maximum number of physical resource blocks, PRBs, that can be assigned to a specific user using a specific beam out of a plurality of users and a plurality of beams, based on a spectral efficiency and a number of bits in a buffer of the base station to be sent to the user;

calculating, using RT-heuristic, a maximum value of a first beam proportional fair, PF, metric and the corresponding beam and users by sorting users based on the spectral efficiency and a throughput achieved by the specific user in the past;

calculating, using Pmax-heuristic, a maximum value of a second beam proportional fair, PF, metric and the corresponding beam and users by sorting users based on the maximum number of PRBs that can be assigned to the specific user, the spectral efficiency and the throughput achieved by the specific user in the past;

selecting one of the RT-heuristic or Pmax-heuristic; and

performing beam and user scheduling based on information regarding the corresponding beam and users according to the selected RT-heuristic or Pmax-heuristic.

According to another aspect of various example embodiments there is provided a method for use in a base station, comprising:

computing a maximum number of physical resource blocks, PRBs, that can be assigned to a specific user using a specific beam out of a plurality of users and a plurality of beams, based on a spectral efficiency and a number of bits in a buffer of the base station to be sent to the user;

calculating a beam proportional fair, PF, metric and the corresponding beam and users by sorting users based on at least the spectral efficiency and the throughput achieved by the specific user in the past; and

performing beam and user scheduling based on information regarding the corresponding beam and users according to a maximum of the beam PF metric.

According to another aspect of the present invention there is provided a computer program product comprising software code portions adapted to produce steps of any of the methods as described above when loaded into the memory of a computer.

According to a still further aspect of the invention there is provided a computer program product as defined above, wherein the computer program product comprises a computer-readable medium on which the software code portions are stored.

According to a still further aspect of the invention there is provided a computer program product as defined above, wherein the computer program product is directly loadable into the internal memory of the computer and/or transmittable via a network by means of at least one of upload, download and push procedures.

According to an aspect of various example embodiments there is provided a computer readable medium storing a computer program as set out above.

According to an exemplary aspect, there is provided a computer program product comprising computer-executable computer program code which, when the program is run on a computer (e.g. a computer of an apparatus according to any one of the aforementioned apparatus-related exemplary aspects of the present disclosure), is configured to cause the computer to carry out the method according to any one of the aforementioned method-related exemplary aspects of the present disclosure.

Such computer program product may comprise (or be embodied) a (tangible) computer-readable (storage) medium or the like on which the computer-executable computer program code is stored, and/or the program may be directly loadable into an internal memory of the computer or a processor thereof.

Further aspects and features of the present invention are set out in the dependent claims.

Brief Description of the Drawings

These and other objects, features, details and advantages will become more fully apparent from the following detailed description of various aspects/embodiments which is to be taken in conjunction with the appended drawings, in which:

Fig. 1 is a diagram illustrating an example of a cumulative distribution function of users in a vertical direction.

Fig. 2 is a diagram illustrating an example of a hybrid beam forming architecture.

Fig. 3 is a diagram illustrating an example of an illustration of an algorithm for allocating PPBs to scheduled users.

Fig. 4 is a diagram illustrating an example of a method according to some example embodiments of the present invention.

Fig. 5 is a diagram illustrating a comparison between heuristic in view of an optimality gap according to some example embodiments of the present invention.

Fig. 6 is a flowchart illustrating an example of a method according to some example embodiments of the invention.

Fig. 7 is a flowchart illustrating another example of a method according to some example embodiments of the invention.

Fig. 8 is a block diagram illustrating an example of an apparatus according to some example embodiments of the invention.

Fig. 9 is a block diagram illustrating another example of an apparatus according to some example embodiments of the invention.

Fig. 10 is a block diagram illustrating another example of an apparatus according to some example embodiments of the invention.

Detailed description

The present disclosure is described herein with reference to particular non-limiting examples and to what are presently considered to be conceivable embodiments. A person skilled in the art will appreciate that the disclosure is by no means limited to these examples, and may be more broadly applied.

It is to be noted that the following description of the present disclosure and its embodiments mainly refers to specifications being used as non-limiting examples for certain exemplary network configurations and deployments. Namely, the present disclosure and its embodiments are mainly described in relation to 3GPP specifications being used as non-limiting examples for certain exemplary network configurations and deployments. As such, the description of example embodiments given herein specifically refers to terminology, which is directly related thereto. Such terminology is only used in the context of the presented non-limiting examples, and does naturally not limit the disclosure in any way. Rather, any other communication or communication related system deployment, etc. may also be utilized as long as compliant with the features described herein.

Hereinafter, various embodiments and implementations of the present disclosure and its aspects or embodiments are described using several variants and/or alternatives. It is generally noted that, according to certain needs and constraints, all of the described variants and/or alternatives may be provided alone or in any conceivable combination (also including combinations of individual features of the various variants and/or alternatives).

According to some example embodiments of the present invention, there is introduced a method for joint user scheduling and analog beam choice in hybrid beamforming.

As already mentioned above, analog beamforming requires use of a single analog beam in a slot thus constraining the users that can be scheduled in a slot.

A good scheduling algorithm can help enhance system performance in spite of the analog beamforming constraint with hybrid beamforming.

An hybrid beamforming architecture promotes a cost and complexity optimized product. It combines the beamforming in digital domain together with beamforming in the analog RF domain at the antenna to reduce cost and provide improved beamforming gain.

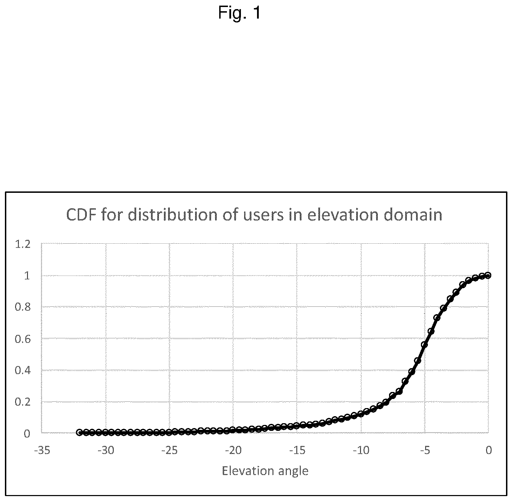

The observed spread of users in urban macro (UMa) and urban micro (UMi) scenarios is much more important in horizontal direction as compared to the vertical direction. Further, a large percentage of users in the vertical direction are confined in a particular scanning range, as shown in Fig. 1, where ~85% users have an elevation direction between 0° to -10° with an average value of -6.2°.

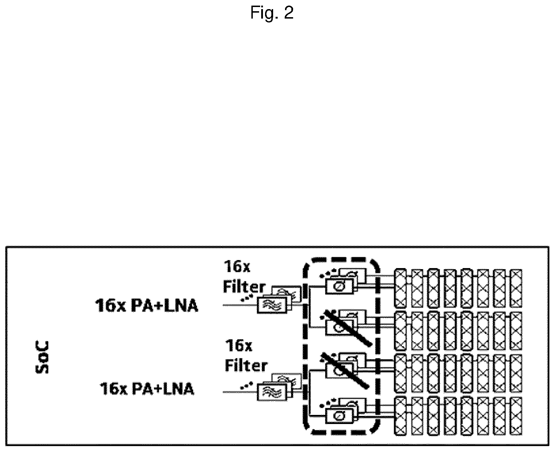

Therefore, it makes sense to reduce complexity when focusing on the elevation direction where an optimized beam with a certain beamwidth can serve most of the users. The rest of the users in elevation domain can be served in a dynamic beam steering fashion. The addition of phase shifters just before antenna or before antenna and filter, as shown in Fig. 2, enables dynamic steering of a beam in vertical direction.

In contrast, digital beamforming can be utilized in the horizontal direction to cater to the wide spread of users across the azimuth domain, thus enabling hybrid beamforming by using digital beamforming in the horizontal direction and analog and limited digital beamforming in the elevation direction.

Optimal selection of the analog beam will allow improved system performance by selecting the analog beam based on user and traffic distribution in the vertical direction whereas a sub-optimal selection of the analog beam can result in degraded coverage and system capacity.

As to the problem addressed according some example embodiments of the present invention, in brief, a hybrid beamforming (HBF) scenario in downlink is considered. At each slot the scheduler needs to jointly select:

- the analog beam coefficients $n^*$, out of an available set $\mathcal{N}$ of beam coefficients
- the set of users to be served $U^*$, out of the total set of connected users $\mathcal{U}$

to maximize a certain beam PF metric.

More particularly, in this document, $R_u(n)$ is the spectral efficiency (SE) per PRB (Physical Resource Block) achievable by user $u$ given that beam $n$ is used. SE per PRB is used as a metric, because a PRB is the minimum resource that can be allocated. The base station can estimate it using wideband channel quality indicator (CQI) along with outer loop link adaptation (OLLA) correction.

$B_u$ is the number of bits in the buffer waiting to be sent to user $u$.

$$P_u^{max}(n) = \left\lceil \frac{B_u}{R_u(n)} \right\rceil$$

Therefore, is the maximum number of PRB's that can be assigned to user $u$ when beam $n$ is used.

Once beam $n$ and users $U$ have been selected for the upcoming slot, the scheduler decides the number $P_u$ of PRB's (with $P_u \le P_u^{max}(n)$ ) that are allocated to each user $u$. Thus, it is generally a function of both $u$ and $n$, i.e., $P_u := P_u(U,n)$.

As a prominent example, the scheduler can compute $P_u(U,n)$ via a procedure where the total number $M$ of available PPBs in a slot is distributed in the most egalitarian manner possible. Some implementation details are provided below.

Algorithm 1: Egalitarian algorithm to allocate PRB's to scheduled users.

*Input*: scheduled users $U \subset \mathcal{U}$, chosen analog beam $n$, maximum number $P_u^{max}(n)$ of PRB's for each user $u \in U$. For SU-MIMO, $M = $#PRB's available. For MU-MIMO, $M = L \times$#PRB's available, where L is the maximum # users per PRB.

- Sort users $U$ in increasing order of $P_u^{max}(n)$ and obtain $u_1, ..., u_{|U|}$
- Set the number of available PRB's to $M' := M$
- For user index $i$ = 1, ..., $|U|$

  ○ in case of SU-MIMO: Set $P_{u_i}(U,n) = \min\left(P_{u_i}^{max}(n), \frac{M'}{|U|-i+1}\right)$ in case of MU-MIMO: Set

  $P_{u_i}(U,n) = \min\left(P_{u_i}^{max}(n, co-\quad scheduled\ UEs), \frac{M'}{|U|-i+1}, M/L\right)$ This basically means that the the number of PRBs needed to drain out the buffer of the UE with MU-MIMO will be larger and depends on the co-scheduled UEs.

  ○ Update $M' := M' - P_{u_i}(U,n)$

*Output:* number of PRB's $P_u(U,n)$ allocated to each user $u$

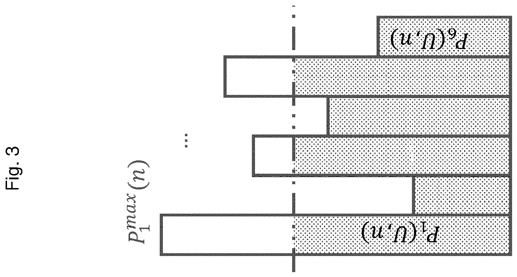

The above-mentioned Algorithm 1 can be exemplified by the following illustrated metaphor (see Fig. 3). Imagine that $M$ litres of water are poured into a set $U$ of communicating vessels, where vessel $u \in U$ has a capacity of $P_u^{max}(n)$ litres. At the end of the procedure, vessel $u$ contains $P_u(U,n)$ litres of water.

At a given time slot, the base station wants to decide the users to be scheduled and which analog beam to be used under the constraint that at most $K$ users can be scheduled. To this aim, it is desired to maximize a weighted beam PF metric, where the weight of each user is represented by the number of allocated PRBs:

$$U^*, n^* = \arg \max_{U \in \mathcal{U}, n \in \mathcal{N}} \sum_{u \in U} \frac{P_u(U,n)R_u(n)}{T_u}$$

$$\text{s. t.} \quad |U| \le K$$

where $P_u(U,n)$ (being the PRB allocation to user $u$ when set of users $U$ is scheduled and beam $n$ is used) is computed, e.g., as in Algorithm 1 and $T_u$ is the throughput $T_u$ achieved by user $u$ in the recent past. As an example, the throughput estimate is given as $T_u(t) = (1 - \alpha)T_u(t - 1) + \alpha T_{inst,u}(t)$, where $T_u(t - 1)$ is the throughput estimate of the UE $u$ in the previous time instant $t$-1 and $T_{inst,u}(t)$ is the instantaneous allocation the UE received in the current instant $t$, and $T_u(t)$ is the throughput estimate of the UE $u$ at the end of the current instance t. The time constant of the filter is $1/\alpha$. Roughly, the memory of the filter is $1/\alpha$ time units. $R_u(n)$ is the spectral efficiency (SE) per PRB (Physical Resource Block) achievable by user $u$ given that beam $n$ is used.

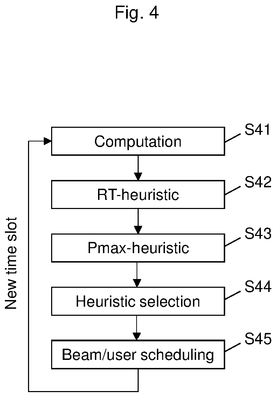

According to some example embodiments of the present invention, there is proposed a method as illustrated in Fig. 4, which includes 5 steps for achieving an improved beam/user scheduling:

- step S41: computation;
- step S42: RT-heuristic;
- step S43: Pmax-heuristic;
- step S44: heuristic selection;
- step S45: beam/user scheduling.

In the following, each step will be described in more detail.

Step S41 relates to the computation. The base station:

- estimates the spectral efficiency $R_u(n)$ achievable by each user $u$ given that beam $n$ is used. It can be estimated using wideband CQI along with OLLA correction.
- retrieves the number $B_u$ of bits in the buffer of user $u$
- computes the maximum number $P_u^{max}(n) = \left\lceil \dfrac{B_u}{R_u(n)} \right\rceil$ of PRB's that can be assigned to user $u$ when beam $n$ is used

That is, the base station computes a maximum number of physical resource blocks, PRBs, that can be assigned to a specific user using a specific beam out of a plurality of users and a plurality of beams, based on a spectral efficiency and a number of bits in a buffer of the base station to be sent to the user. The computing comprises for each beam n, estimating the spectral efficiency $R_u(n)$ achievable by each user u in one PRB given that a specific beam n is used, retrieving the throughput $T_u$ achieved by user $u$ in the recent past and the number of bits $B_u$ in the buffer for each user u; and computing the maximum number of PPBs $P_u^{max}(n) = \left\lceil \dfrac{B_u}{R_u(n)} \right\rceil$ that can be assigned to each user u.

Step S42 relates to RT-heuristic. Using RT-heuristic, the base station calculates a maximum value of a first beam, PF, metric and the corresponding beam and users by sorting users based on the spectral efficiency and a throughput achieved by the specific user in the past.

The base station performs the following:

- for each beam n, sorting users in decreasing order of PF metric $R_u(n)/T_u$;
- for each beam n , selecting the users in that order until either a sum of PRBs assigned to each of the users exceeds the maximum number of PRBs that can be assigned to the selected users or a user limit K is reached;
- for each beam n , computing the first beam PF metric which is a sum of a product of the PF metric $R_u(n)/T_u$ and the number of PRBs assigned to each of the selected users;
- determining a beam, for which the first beam PF metric has the highest value, and the users corresponding to that beam.

In other words, for each beam $n$, the base station:

- sort users in decreasing order of PF metric $R_u(n)/T_u$ and obtain list of users $u_1, ..., u_{|U|}$
- select the users in the above order until either the sum of the PRBs allocated/assigned to all users exceeds the maximum limit on the number of PRBs that can be allocated/assigned or the user limit K is reached:

$$x^{*RT}(n) = \arg \max_{x=1,\dots,K} \sum_{i=1}^{x} \frac{P_{u_i}(\{u_1,\dots,u_x\},n)R_{u_i}(n)}{T_{u_i}}$$

and the corresponding best weighted beam PF metric:

$$PF^{*RT}(n) = \max_{x=1,\dots,K} \sum_{i=1}^{x} \frac{P_{u_i}(\{u_1,\dots,u_x\},n)R_{u_i}(n)}{T_{u_i}}$$

$$n^{*RT} = \arg \max_{n \in \mathcal{N}} PF^{*RT}(n)$$

Then, the base station computes the best beam: and the best beam PF metric:

$$PF^{*RT} = \max_{n \in \mathcal{N}} PF^{*RT}(n)$$

Step S43 relates to Pmax-heuristic. Using Pmax-heuristic, the base station calculates a maximum value of a second beam, PF, metric and the corresponding beam and users by sorting users based on the maximum number of PRBs that can be assigned to the specific user, the spectral efficiency and the throughput achieved by the specific user in the past.

The base station performs:

- for each beam n, sorting users in decreasing order of $P_u^{max}(n)R_u(n)/T_u$ ;
- for each beam n, selecting the users in that order until either a sum of PRBs assigned to each of the users exceeds the maximum number of PRBs that can be assigned to the selected users or a user limit K is reached;
- for each beam n, computing the second beam PF metric which is a sum of a product of PF metric $R_u(n)/T_u$ and the number of PRBs assigned to each of the selected users;
- determining a beam, for which the second beam PF metric has the highest value, and the users corresponding to that beam.

In other words, for each beam *n,* the base station:

- sort users in decreasing order of $P_u^{max}(n)R_u(n)/T_u$ and obtain list of users $u_1, \dots, u_{|U|}$
- select the users in the above order until either the sum of the PRBs allocated/assigned to all users exceeds the maximum limit on the number of PRBs that can be allocated/assigned or the user limit K is reached:

$$x^{*P}(n) = \arg \max_{x=1,\dots,K} \sum_{i=1}^{x} \frac{P_{u_i}(\{u_1,\dots,u_x\},n)R_{u_i}(n)}{T_{u_i}}$$

and the corresponding best weighted beam PF metric:

$$PF^{*P}(n) = \max_{x=1,\dots,K} \sum_{i=1}^{x} \frac{P_{u_i}(\{u_1,\dots,u_x\},n)R_{u_i}(n)}{T_{u_i}}$$

$$n^{*P} = \arg \max_{n \in \mathcal{N}} PF^{*P}(n)$$

Then, the base station computes the best beam: and the best beam PF metric:

$$PF^{*P} = \max_{n \in \mathcal{N}} PF^{*P}(n)$$

Step S44 relates to heuristic selection. In a basic heuristic selection, the base station chooses the heuristic that provides the highest beam PF metric value. Let *n\** be the selected analog beam and $u_1, \dots, u_x^*$ the selected users.

That is, the base station determines a highest beam PF metric value among the first beam PF metric having the highest value calculated using RT-heuristic and the second beam PF metric having the highest value calculated using Pmax-heuristic and selecting the heuristic that has provided the highest beam PF metric value.

More details regarding an enhanced heuristic selection step according to some example embodiments of the present invention will be described below.

Step S45 relates to beam and user scheduling. For the upcoming slot, beam $n^*$ is used and users $u_1$, ...,$u_x*$ are served. That is, the base station selects a best beam that gives the maximum beam PF metric computed in accordance with the selected heuristic and scheduling the selected users corresponding to the best beam

According to some example embodiments of the present invention, the following innovations are provided

    a. Computation of P-max heuristic which sorts users also with respect to their respective number of requested PRB's (RT-heuristic only considers PF metric R/T) (step S43 as mentioned above)

    b. Selection of the best heuristic between RT and P-max (basic heuristic selection), guaranteeing an important performance improvement for small number of UEs in a slot

    c. Enhanced heuristic selection: (more general) alternative to point above, guaranteeing always better than or on par performance with respect to the baseline of RT heuristic, regardless of the scheduled number of UEs in a slot (alternative to steps S42 to S44 as mentioned above, which will be described below in more detail)

    d. Low-complexity version of RT-heuristic (step S42 as mentioned above). There is provided a method that speeds up the computation of the baseline RT-heuristic. More specifically, instead of computing $PF(x,n)$ for all values of $x = 1, 2, ..., K$, Step S42 computes $PF(x,n)$ for just *two* values of $x$, namely $\overline{x}^{RT}$ and $\overline{x}^{RT} + 1$.

In view of steps S43 and S44, a substantial improvement in the performance can be achieved. Moreover, in step S42, a (provably good) method to decrease the computational complexity of baseline RT-heuristic is provided.

In the following, a more detailed description and explanation of the innovations according to some example embodiments of the present invention is provided.

Step S42:

Efficient computation of RT-heuristic. One way to solve the RT-heuristic for a given beam $n$ is to compute the following

$$PF(x,n) := \sum_{i=1}^{x} \frac{P_{u_i}(\{u_1, ..., u_x\}, n) R_{u_i}(n)}{T_{u_i}}$$

for each $x = 1, ...,K$ and then choose the point $x$ at which the maximum is attained.

However, a more efficient way allows one to compute $PF(x,n)$ for just two values of x. In such a case, the base station performs for each beam n:

- sorting users in decreasing order of PF metric $R_u(n)/T_u$ ;

- computing, in that order, a user $\overline{x}^{RT}$ such that a cumulative sum of the maximum number of PRBs $P_u^{max}(n)$ for each of the users up to that user is within a predetermined number M of available PPBs and beyond that user exceeds M; and

- computing a first beam PF metric corresponding to $\overline{x}^{RT}$ as the sum of the product of the PF metric $R_u(n)/T_u$ and the maximum number of PRBs $P_u^{max}(n)$ of the first user to user $\overline{x}^{RT}$ in the sorted order;

- computing a first beam PF metric corresponding to $\overline{x}^{RT} + 1$ as the sum of the product of the PF metric $R_u(n)/T_u$ and the assigned number of PPBs $P_u(n)$ of the first user to user $\overline{x}^{RT} + 1$ in the sorted order;

- selecting the highest first beam PF metric between the ones corresponding to $\overline{x}^{RT}$ and $\overline{x}^{RT} + 1$ as the first beam PF metric and selecting the corresponding users.

In other words, the method is the following:

    i. Compute the maximum number of users that can be assigned the maximum number of requested PRB's without exceeding the budget *M,* namely:

$$\bar{x}^{RT} = \max\left\{x: \sum_{i=1}^{x} P_{u_i}^{max}(n) \leq M\right\}$$

where users are sorted in decreasing order of $R_u(n)/T_u$.

ii. Compute the highest value between $PF(\bar{x}^{RT},n)$ and $PF(\bar{x}^{RT}+1,n)$, and choose the users to be scheduled accordingly.

Fact 1. One can prove mathematically that the procedure above is optimal, provides exactly the same outcome as result as computing $PF(x,n)$ for all $K$ values $x = 1, ... ,K$.

It is noted that low complexity is a crucial feature for a scheduling algorithm that must provide an answer within fractions of milliseconds.

RT-heuristic performance in the "large $\underline{K}$" regime. It can be proved mathematically that, if the bound on the maximum number $\underline{K}$ of scheduled users is loose, then RT-heuristic is nearly optimal. The results are sketched below.

Fact 2. Let $PF^{RT}$ and $PF^*$ be the beam PF metric achieved by the RT-heuristic and by the optimal solution for a given beam $n$ (that we omit to mention for simplicity of notation). If $K = |U|$, then the RT-heuristic performance optimality gap is:

$$\frac{PF^* - PF^{RT}}{PF^*} \leq 1 - \frac{\dfrac{\sum_{x=1}^{\bar{x}^{RT}} P_{u_x}^{max} R_{u_x}}{T_{u_x}}}{\dfrac{\sum_{x=1}^{\bar{x}^{RT}} P_{u_x}^{max} R_{u_x}}{T_{u_x}} + \left(M - \sum_{x=1}^{\bar{x}^{RT}} P_{u_x}^{max} R_{u_x}/T_{u_x}\right)\dfrac{R_{u_{\bar{x}^{RT}+1}}}{T_{u_{\bar{x}^{RT}+1}}}}$$

The formula above says that the sub-optimality only comes by an amount proportional to the PRB's that are left over after the first $\bar{x}^{RT}$ users are scheduled (i.e., the quantity $M - \sum_{x=1}^{\bar{x}^{RT}} P_{u_x}^{max} R_{u_x}/T_{u_x}$). In fact, if $M = \dfrac{\sum_{x=1}^{\bar{x}^{RT}} P_{u_x}^{max} R_{u_x}}{T_{u_x}}$, then the optimality gap is 0 and the RT-heuristic is optimal.

Hence, RT-heuristic proves to be a very good solution when the maximum number of scheduled users $K$ is "large" enough.

Step S43:

Pmax-heuristic performance in the "small $\underline{K}$" regime. In the opposite regime where $K$ is "small", then RT-heuristic may be (highly) suboptimal. Indeed, RT-heuristic, when sorting users, does *not* take into account the number of requested PRB's. Therefore, it may select $\underline{K}$ users with almost empty buffer, which then results into a consistent waste of resources. Instead, Pmax-heuristic gives more priority to users with longer buffer (i.e., higher $P^{max}$), which then results into a better resource utilization when only few users can be scheduled. Hence, in this regime Pmax-heuristic outperforms RT-heuristic and can (under some conditions) attain the optimal solution.

This can be formalized as follows.

Fact 3. Let us fix beam $n$. If $x^{*P}(n) = K$ and $\sum_{i=1}^{x^{*P}(n)} P_{u_i}^{max}(n) \leq M$, where users $u$ are sorted in decreasing order of $P_u^{max}(n)R_u(n)/T_u$, then Pmax-heuristic provides the optimal solution.

In other words, Pmax-heuristic is optimal when the computed solution is such that the constraint on the maximum number $\underline{K}$ of users is *tight* while the constraint on the maximum number of PRB's is *loose.*

Step S44:

Basic Heuristic Selection: Fact 2 and 3 together suggest that

- there is no one heuristic that performs well under all regimes
- it is hard to know which heuristic works best in advance, before running them.

For such reasons, RT- and Pmax-heuristic are run in parallel and the one providing the best result is selected.

According to an enhanced heuristic selection, there is presented a generalization and enhancement of the basic heuristic selection that simply prescribes to select the best between RT- and Pmax-heuristic.

According to some example embodiments of the present invention, the above steps S42, S43 and S44 are replaced by new step(s) that calculates a beam PF metric and the corresponding beam and users by sorting users based on at least the spectral efficiency and the throughput achieved by the specific user in the past.

For each analog beam *n*:

For $q \in \mathcal{Q} \subset \{0, \ldots, |\mathcal{U}|\}$:

Sort users in decreasing order of $R_u(n)/T_u$ (as in RT heuristic) and take the first q of them.

1. Sort the remaining $|\mathcal{U}| - q$ users in decreasing order of $P_u^{max}(n)R_u(n)/T_u$ (as in Pmax-heuristic)

2. Compute $F(q,n) := \max\limits_{x=1,\ldots,K} \sum_{i=1}^{x} \frac{P_{u_i}(\{u_1,\ldots,u_x\},n)R_{u_i}(n)}{T_{u_i}}$

Finally, the base station computes the optimal $n^*, q^* = \mathrm{argmax} F(q,n)$, the corresponding user sorting and, finally, the associated user selection.

That is, the base station performs:

- for each beam n and for each q value of users starting from 0 to maximum user limit K, sorting users in decreasing order of $R_u(n)/T_u$ and taking the first q of the users,

- for each beam n, sorting the remaining users in decreasing order of $P_u^{max}(n)R_u(n)/T_u$;

- for each beam n, selecting the users in that order until either a sum of the PRBs assigned to each of the selected users exceeds the maximum number of PRBs that can be assigned to the selected users or the user limit K is reached;

- for each beam n, for the given q value sorted in decreasing order of PF metric $R_u(n)/T_u$, computing a first beam PF metric which is a sum of a product of the PF metric $R_u(n)/T_u$ and the number of PRBs assigned to each of the selected users;

- for each beam n, for the given q value sorted in decreasing order of $P_u^{max}(n)R_u(n)/T_u$ computing a second beam PF metric which is a sum of a product of PF metric $R_u(n)/T_u$ and the number of PRBs assigned to each of the selected users;

- computing, for each q value, a final beam PF metric by adding the first and second beam PF metrics;

- determining, for each beam, a q value for which the final beam PF metric is the highest; and

- determining a beam, for which the final beam PF metric has the highest value.

Remark 1. If $\mathcal{Q} = \{0, |\mathcal{U}|\}$, then this procedure boils down to the basic heuristic selection step S44 described above, where the base station picks the best between RT-heuristic ( $q = |\mathcal{U}|$ ) and Pmax-heuristic (q = 0). Hence, the one above can be seen as a generalization of step S44, i.e., the basic heuristic selection.

Remark 2. The rationale behind the heuristic is that, in the low-medium *K* regime, one wants to pick a *mix* of users having high beam PF metric (as in RT-heuristic) *and* large buffer (as in Pmax heuristic).

Performance/complexity trade-off. Clearly, the larger the set *Q*, the higher the performance in terms of beam PF metric, but the higher the computation complexity as well.

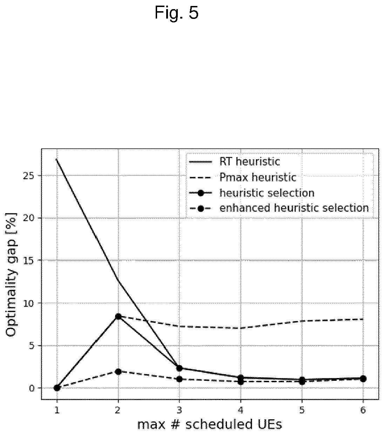

Numerical evaluations. The results of numerical evaluations are illustrated in Fig. 5. As anticipated in the formal results above, in the low-*K* regime (left-hand part of Fig. 5) the Pmax-heuristic outperforms baseline RT-heuristic, which then takes the upper hand when *K* grows. Therefore, by running the two heuristics in parallel and choosing the best one, the resulting optimality gap is the "heuristic selection" curve in Fig. 5.

As it is apparent in Fig. 5, the enhanced heuristic selection with $\mathcal{Q} = \{0,1,\ldots,|\mathcal{U}|\}$ outperforms the simple/basic heuristic selection, since it searches over a larger space of alternatives. It provides important gains when the maximum number of users *K* is medium-low. On the other hand, when *K* is large, the enhanced and simple/basic heuristic selection converges to RT-heuristic, as theory suggests (since RT-heuristic tends to be nearly optimal for high *K*). However, the complexity of the enhanced heuristic is larger. Thus, the right trade-off between performance and complexity depends on practical constraints such as hardware speed, that are to be checked on a per-case basis.

Compared to other solutions, in which RT-heuristics are considered as preferred options, some example embodiments of the present invention, as described above, provide the following improvements upon the baseline RT-heuristics in two main aspects:

- Performance: Some example embodiments of the present invention as described above -provably- outperform baseline RT-heuristic in terms of optimality gap, as also confirmed by our numerical evaluations in Fig.5. Specifically, the baseline RT-heuristic is (highly) sub-optimal for small number of schedulable users, while the basic heuristic selection or enhanced heuristic selection is uniformly nearly optimal for any number of users $K$.
- Complexity: Some example embodiments of the present invention as described above provide a method that speeds up the computation of the baseline RT-heuristic, as detailed in step S42. More specifically, instead of computing $PF(x,n)$ for all values of $x = 1,2, ...,K,$ according to other solutions, step S42 computes $PF(x,n)$ for just *two* values of x, namely $\overline{x}^{RT}$ and $\overline{x}^{RT} + 1$.

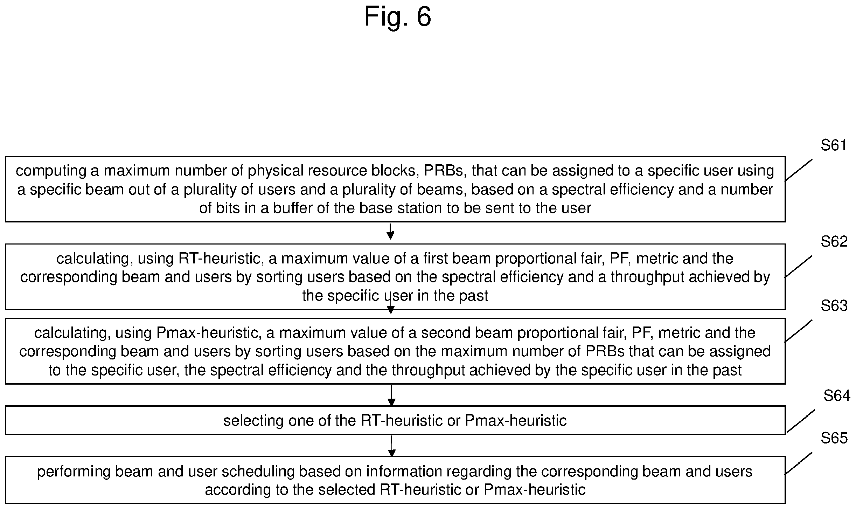

In the following, a more general description of example versions of the present invention is made with respect to Figs. 6 to 8.

Fig. 6 is a flowchart illustrating an example of a method according to some example versions of the present invention.

According to example versions of the present invention, the method may be implemented in or may be part of a base station. The method comprises

computing, in a step S61, a maximum number of physical resource blocks, PRBs, that can be assigned to a specific user using a specific beam out of a plurality of users and a plurality of beams, based on a spectral efficiency and a number of bits in a buffer of the base station to be sent to the user;

calculating, in a step S62, using RT-heuristic, a maximum value of a first beam proportional fair, PF, metric and the corresponding beam and users by sorting users based on the spectral efficiency and a throughput achieved by the specific user in the past;

calculating, in a step S63, using Pmax-heuristic, a maximum value of a second beam proportional fair, PF, metric and the corresponding beam and users by sorting users based on the maximum number of PRBs that can be assigned to the specific user, the spectral efficiency and the throughput achieved by the specific user in the past;

selecting, in a step S64, one of the RT-heuristic or Pmax-heuristic; and

performing, in a step S65, beam and user scheduling based on information regarding the corresponding beam and users according to the selected RT-heuristic or Pmax-heuristic.

According to some example versions of the present invention, the computing comprises for each beam n:

estimating the spectral efficiency $R_u(n)$ achievable by each user u in one PRB given that a specific beam n is used;

retrieving the throughput $T_u$ achieved by user *u* in the recent past and the number of bits $B_u$ in the buffer for each user u; and

$$P_u^{max}(n) = \left\lceil \frac{B_u}{R_u(n)} \right\rceil$$

computing the maximum number of PRBs that can be assigned to each user u.

According to some example versions of the present invention, the calculating using RT-heuristic comprises:

for each beam n , sorting users in decreasing order of PF metric $R_u(n)/T_u$;

for each beam n , selecting the users in that order until either a sum of PRBs assigned to each of the users exceeds the maximum number of PRBs that can be assigned to the selected users or a user limit K is reached;

for each beam n , computing the first beam PF metric which is a sum of a product of the PF metric $R_u(n)/T_u$ and the number of PRBs assigned to each of the selected users; and

determining a beam, for which the first beam PF metric has the highest value, and the users corresponding to that beam.

According to some example versions of the present invention, the calculating using RT-heuristic comprises for each beam n:

sorting users in decreasing order of PF metric $R_u(n)/T_u$ ;

computing, in that order, a user $\overline{x}^{RT}$ such that a cumulative sum of the maximum number of PPBs $P_u^{max}(n)$ for each of the users up to that user is within a predetermined number M of available PRBs and beyond that user exceeds M; computing a first beam PF metric corresponding to $\overline{x}^{RT}$ as the sum of the product of the PF metric $R_u(n)/T_u$ and the maximum number of PRBs $P_u^{max}(n)$ of the first user to user $\overline{x}^{RT}$ in the sorted order; computing a first beam PF metric corresponding to $\overline{x}^{RT} + 1$ as the sum of the product of the PF metric $R_u(n)/T_u$ and the assigned number of PPBs $P_u(n)$ of the first user to user $\overline{x}^{RT} + 1$ in the sorted order; and selecting the highest first beam PF metric between the ones corresponding to $\overline{x}^{RT}$ and $\overline{x}^{RT} + 1$ as the first beam PF metric and selecting the corresponding users.

According to some example versions of the present invention, the calculating using Pmax-heuristic comprises:

for each beam n, sorting users in decreasing order of $P_u^{max}(n)R_u(n)/T_u$;
for each beam n, selecting the users in that order until either a sum of PRBs assigned to each of the users exceeds the maximum number of PRBs that can be assigned to the selected users or a user limit K is reached;
for each beam n, computing the second beam PF metric which is a sum of a product of PF metric $R_u(n)/T_u$ and the number of PRBs assigned to each of the selected users; and
determining a beam, for which the second beam PF metric has the highest value, and the users corresponding to that beam.

According to some example versions of the present invention, the selecting comprises:
determining a highest beam PF metric value among the first beam PF metric having the highest value calculated using RT-heuristic and the second beam PF metric having the highest value calculated using Pmax-heuristic and selecting the heuristic that has provided the highest beam PF metric value.
According to some example versions of the present invention, the performing beam and user scheduling comprises:
selecting a best beam that gives the maximum beam PF metric computed in accordance with the selected heuristic and scheduling the selected users corresponding to the best beam.

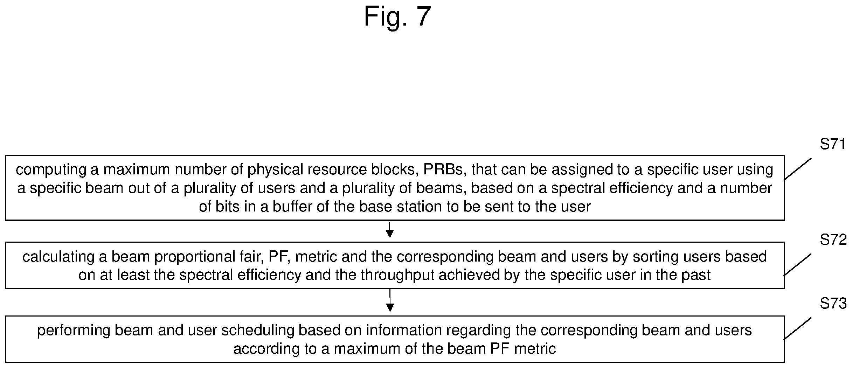

Fig. 7 is a flowchart illustrating another example of a method according to some example versions of the present invention.
According to example versions of the present invention, the method may be implemented in or may be part of a base station. The method comprises

computing, in a step S71, a maximum number of physical resource blocks, PRBs, that can be assigned to a specific user using a specific beam out of a plurality of users and a plurality of beams, based on a spectral efficiency and a number of bits in a buffer of the base station to be sent to the user;
calculating, in a step S72, a beam proportional fair, PF, metric and the corresponding beam and users by sorting users based on at least the spectral efficiency and the throughput achieved by the specific user in the past; and
performing, in a step S73, beam and user scheduling based on information regarding the corresponding beam and users according to a maximum of the beam PF metric.

According to some example versions of the present invention, the computing comprises for each beam n:

estimating the spectral efficiency $R_u(n)$ achievable by each user u in one PRB given that a specific beam n is used;
retrieving the throughput $T_u$ achieved by user $u$ in the recent past and the number of bits $B_u$ in the buffer for each user u; and

computing the maximum number of PRBs $P_u^{max}(n) = \left\lceil \frac{B_u}{R_u(n)} \right\rceil$ that can be assigned to each user u.

According to some example versions of the present invention, for each beam n and for each q value of users starting from 0 to maximum user limit K, sorting users in decreasing order of $R_u(n)/T_u$ and taking the first q of the users,

for each beam n, sorting the remaining users in decreasing order of $P_u^{max}(n)R_u(n)/T_u$;
for each beam n, selecting the users in that order until either a sum of the PRBs assigned to each of the selected users exceeds the maximum number of PRBs that can be assigned to the selected users or the user limit K is reached; for each beam n, for the given q value sorted in decreasing order of PF metric $R_u(n)/T_u$, computing a first beam PF metric which is a sum of a product of the PF metric $R_u(n)/T_u$ and the number of PRBs assigned to each of the selected users;

for each beam n, for the given q value sorted in decreasing order of $P_u^{max}(n)R_u(n)/T_u$ computing a second beam PF metric which is a sum of a product of PF metric $R_u(n)/T_u$ and the number of PRBs assigned to each of the selected users;

computing, for each q value, a final beam PF metric by adding the first and second beam PF metrics;

determining, for each beam, a q value for which the final beam PF metric is the highest; and

determining a beam, for which the final beam PF metric has the highest value.

According to some example versions of the present invention, the performing beam and user scheduling comprises:

selecting a best beam that gives the maximum final beam PF metric and scheduling the selected users corresponding to the best beam.

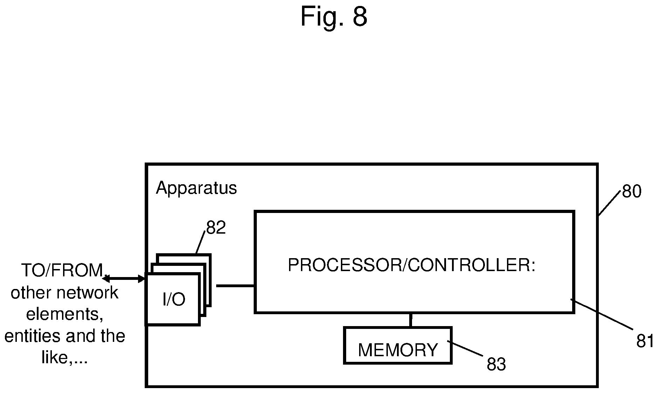

Fig. 8 is a block diagram illustrating an example of an apparatus according to some example versions of the present invention.

In Fig. 8, a block circuit diagram illustrating a configuration of an apparatus 80 is shown, which is configured to implement the above described various aspects of the invention. It is to be noted that the apparatus 80 shown in Fig. 8 may comprise several further elements or functions besides those described herein below, which are omitted herein for the sake of simplicity as they are not essential for understanding the invention. Furthermore, the apparatus may be also another device having a similar function, such as a chipset, a chip, a module etc., which can also be part of an apparatus or attached as a separate element to the apparatus, or the like.

The apparatus 80 may comprise a processing function or processor 81, such as a CPU or the like, which executes instructions given by programs or the like. The processor 81 may comprise one or more processing portions dedicated to specific processing as described below, or the processing may be run in a single processor. Portions for executing such specific processing may be also provided as discrete elements or within one or further processors or processing portions, such as in one physical processor like a CPU or in several physical entities, for example. Reference sign 82 denotes transceiver or input/output (I/O) units (interfaces) connected to the processor 81. The I/O units 82 may be used for communicating with one or more other network elements, entities, terminals or the like. The I/O units 82 may be a combined unit comprising communication equipment towards several network elements, or may comprise a distributed structure with a plurality of different interfaces for different network elements. The apparatus 80 further comprises at least one memory 83 usable, for example, for storing data and programs to be executed by the processor 81 and/or as a working storage of the processor 81.

The processor 81 is configured to execute processing related to the above-described aspects.

In particular, the apparatus 80 may be implemented in or may be part of a base station, or the like and may be configured to perform processing as described in connection with Fig. 6.

Thus, according to some example versions of the present invention, there is provided an apparatus 80 for use in a base station, comprising at least one processor 81, and at least one memory 83 storing instructions that, when executed by the at least one processor 81, cause the apparatus 80 at least to perform

computing a maximum number of physical resource blocks, PRBs, that can be assigned to a specific user using a specific beam out of a plurality of users and a plurality of beams, based on a spectral efficiency and a number of bits in a buffer of the base station to be sent to the user;

calculating, using RT-heuristic, a maximum value of a first beam proportional fair, PF, metric and the corresponding beam and users by sorting users based on the spectral efficiency and a throughput achieved by the specific user in the past;

calculating, using Pmax-heuristic, a maximum value of a second beam proportional fair, PF, metric and the corresponding beam and users by sorting users based on the maximum number of PRBs that can be assigned to the specific user, the spectral efficiency and the throughput achieved by the specific user in the past;

selecting one of the RT-heuristic or Pmax-heuristic; and

performing beam and user scheduling based on information regarding the corresponding beam and users according to the selected RT-heuristic or Pmax-heuristic.

According to some example versions of the present invention, the computing comprises for each beam n:

estimating the spectral efficiency $R_u(n)$ achievable by each user u in one PRB given that a specific beam n is used;

retrieving the throughput $T_u$ achieved by user $u$ in the recent past and the number of bits $B_u$ in the buffer for each user u; and

computing the maximum number of PRBs $P_u^{max}(n) = \left\lceil \frac{B_u}{R_u(n)} \right\rceil$ that can be assigned to each user u.

According to some example versions of the present invention, the calculating using RT-heuristic comprises:

for each beam n , sorting users in decreasing order of PF metric $R_u(n)/T_u$;
for each beam n , selecting the users in that order until either a sum of PRBs assigned to each of the users exceeds the maximum number of PRBs that can be assigned to the selected users or a user limit K is reached;
for each beam n , computing the first beam PF metric which is a sum of a product of the PF metric $R_u(n)/T_u$ and the number of PRBs assigned to each of the selected users; and
determining a beam, for which the first beam PF metric has the highest value, and the users corresponding to that beam.

According to some example versions of the present invention, the calculating using RT-heuristic comprises for each beam n:

sorting users in decreasing order of PF metric $R_u(n)/T_u$ ;

computing, in that order, a user $\overline{x}^{RT}$ such that a cumulative sum of the maximum number of PRBs $P_u^{max}(n)$ for each of the users up to that user is within a predetermined number M of available PRBs and beyond that user exceeds M;
computing a first beam PF metric corresponding to $\overline{x}^{RT}$ as the sum of the product of the PF metric $R_u(n)/T_u$ and the maximum number of PRBs $P_u^{max}(n)$ of the first user to user $\overline{x}^{RT}$ in the sorted order;
computing a first beam PF metric corresponding to $\overline{x}^{RT}+1$ as the sum of the product of the PF metric $R_u(n)/T_u$ and the assigned number of PPBs $P_u(n)$ of the first user to user $\overline{x}^{RT}+1$ in the sorted order; and
selecting the highest first beam PF metric between the ones corresponding to $\overline{x}^{RT}$ and $\overline{x}^{RT}+1$ as the first beam PF metric and selecting the corresponding users.

According to some example versions of the present invention, the calculating using Pmax-heuristic comprises:

for each beam n, sorting users in decreasing order of $P_u^{max}(n)R_u(n)/T_u$ ;
for each beam n, selecting the users in that order until either a sum of PRBs assigned to each of the users exceeds the maximum number of PRBs that can be assigned to the selected users or a user limit K is reached;
for each beam n, computing the second beam PF metric which is a sum of a product of PF metric $R_u(n)/T_u$ and the number of PRBs assigned to each of the selected users; and
determining a beam, for which the second beam PF metric has the highest value, and the users corresponding to that beam.

According to some example versions of the present invention, the selecting comprises:
determining a highest beam PF metric value among the first beam PF metric having the highest value calculated using RT-heuristic and the second beam PF metric having the highest value calculated using Pmax-heuristic and selecting the heuristic that has provided the highest beam PF metric value.
According to some example versions of the present invention, the performing beam and user scheduling comprises:

selecting a best beam that gives the maximum beam PF metric computed in accordance with the selected heuristic and scheduling the selected users corresponding to the best beam.

According to some example versions of the present invention, the apparatus 80 may be implemented in or may be part of a base station, or the like and may be configured to perform processing as described in connection with Fig. 7.
Thus, according to some example versions of the present invention, there is provided an apparatus 80 for use in a base station, comprising at least one processor 81, and at least one memory 83 storing instructions that, when executed by the at least one processor 81, cause the apparatus 80 at least to perform

computing a maximum number of physical resource blocks, PRBs, that can be assigned to a specific user using a specific beam out of a plurality of users and a plurality of beams, based on a spectral efficiency and a number of bits in a buffer of the base station to be sent to the user;

calculating a beam proportional fair, PF, metric and the corresponding beam and users by sorting users based on at least the spectral efficiency and the throughput achieved by the specific user in the past; and

performing beam and user scheduling based on information regarding the corresponding beam and users according to a maximum of the beam PF metric.

According to some example versions of the present invention, the computing comprises for each beam n:

estimating the spectral efficiency $R_u(n)$ achievable by each user u in one PRB given that a specific beam n is used;

retrieving the throughput $T_u$ achieved by user $u$ in the recent past and the number of bits $B_u$ in the buffer for each user u; and

computing the maximum number of PRBs $$P_u^{max}(n) = \left\lceil \frac{B_u}{R_u(n)} \right\rceil$$ that can be assigned to each user u.

According to some example versions of the present invention, the calculating comprises:

for each beam n and for each q value of users starting from 0 to maximum user limit K, sorting users in decreasing order of $R_u(n)/T_u$ and taking the first q of the users,

for each beam n, sorting the remaining users in decreasing order of $P_u^{max}(n)R_u(n)/T_u$ ;

for each beam n, selecting the users in that order until either a sum of the PRBs assigned to each of the selected users exceeds the maximum number of PRBs that can be assigned to the selected users or the user limit K is reached;

for each beam n, for the given q value sorted in decreasing order of PF metric $R_u(n)/T_u$, computing a first beam PF metric which is a sum of a product of the PF metric $R_u(n)/T_u$ and the number of PRBs assigned to each of the selected users;

for each beam n, for the given q value sorted in decreasing order of $P_u^{max}(n)R_u(n)/T_u$ computing a second beam PF metric which is a sum of a product of PF metric $R_u(n)/T_u$ and the number of PRBs assigned to each of the selected users;

computing, for each q value, a final beam PF metric by adding the first and second beam PF metrics;

determining, for each beam, a q value for which the final beam PF metric is the highest; and

determining a beam, for which the final beam PF metric has the highest value.

According to some example versions of the present invention, the performing beam and user scheduling comprises:

selecting a best beam that gives the maximum final beam PF metric and scheduling the selected users corresponding to the best beam.

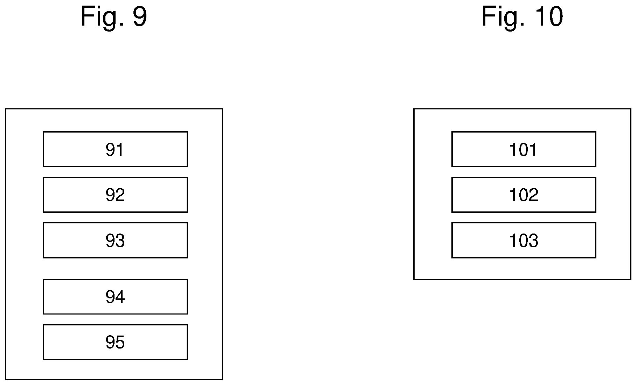

Further, the present invention may be implemented by an apparatus for use in a base station, comprising means for performing the above-described processing, as shown in Fig. 9.

That is, according to some example versions of the present invention, as shown in Fig. 9, the apparatus for use in a base station comprises

means 91 for computing a maximum number of physical resource blocks, PRBs, that can be assigned to a specific user using a specific beam out of a plurality of users and a plurality of beams, based on a spectral efficiency and a number of bits in a buffer of the base station to be sent to the user;

means 92 for calculating, using RT-heuristic, a maximum value of a first beam proportional fair, PF, metric and the corresponding beam and users by sorting users based on the spectral efficiency and a throughput achieved by the specific user in the past;

means 93 for calculating, using Pmax-heuristic, a maximum value of a second beam proportional fair, PF, metric and the corresponding beam and users by sorting users based on the maximum number of PRBs that can be assigned to the specific user, the spectral efficiency and the throughput achieved by the specific user in the past;

means 94 for selecting one of the RT-heuristic or Pmax-heuristic; and

means 95 for performing beam and user scheduling based on information regarding the corresponding beam and users according to the selected RT-heuristic or Pmax-heuristic.

According to some example versions of the present invention, the computing comprises for each beam n:

estimating the spectral efficiency $R_u(n)$ achievable by each user u in one PRB given that a specific beam n is used;
retrieving the throughput $T_u$ achieved by user *u* in the recent past and the number of bits $B_u$ in the buffer for each user u; and

computing the maximum number of PRBs $P_u^{max}(n) = \left\lceil \frac{B_u}{R_u(n)} \right\rceil$ that can be assigned to each user u.

According to some example versions of the present invention, the calculating using RT-heuristic comprises:

for each beam n , sorting users in decreasing order of PF metric $R_u(n)/T_u$;
for each beam n , selecting the users in that order until either a sum of PRBs assigned to each of the users exceeds the maximum number of PRBs that can be assigned to the selected users or a user limit K is reached;
for each beam n , computing the first beam PF metric which is a sum of a product of the PF metric $R_u(n)/T_u$ and the number of PRBs assigned to each of the selected users; and
determining a beam, for which the first beam PF metric has the highest value, and the users corresponding to that beam.

According to some example versions of the present invention, the calculating using RT-heuristic comprises for each beam n:

sorting users in decreasing order of PF metric $R_u(n)/T_u$ ;

computing, in that order, a user $\overline{x}^{RT}$ such that a cumulative sum of the maximum number of PRBs $P_u^{max}(n)$ for each of the users up to that user is within a predetermined number M of available PRBs and beyond that user exceeds M;
computing a first beam PF metric corresponding to $\overline{x}^{RT}$ as the sum of the product of the PF metric $R_u(n)/T_u$ and the

maximum number of PRBs $P_u^{max}(n)$ of the first user to user $\overline{x}^{RT}$ in the sorted order;
computing a first beam PF metric corresponding to $\overline{x}^{RT} + 1$ as the sum of the product of the PF metric $R_u(n)/T_u$ and the assigned number of PPBs $P_u(n)$ of the first user to user $\overline{x}^{RT} + 1$ in the sorted order; and
selecting the highest first beam PF metric between the ones corresponding to $\overline{x}^{RT}$ and $\overline{x}^{RT}+ 1$ as the first beam PF metric and selecting the corresponding users.

According to some example versions of the present invention, the calculating using Pmax-heuristic comprises:

for each beam n, sorting users in decreasing order of $P_u^{max}(n)R_u(n)/T_u$ ;
for each beam n, selecting the users in that order until either a sum of PRBs assigned to each of the users exceeds the maximum number of PRBs that can be assigned to the selected users or a user limit K is reached;
for each beam n, computing the second beam PF metric which is a sum of a product of PF metric $R_u(n)/T_u$ and the number of PRBs assigned to each of the selected users; and
determining a beam, for which the second beam PF metric has the highest value, and the users corresponding to that beam.

According to some example versions of the present invention, the selecting comprises:
determining a highest beam PF metric value among the first beam PF metric having the highest value calculated using RT-heuristic and the second beam PF metric having the highest value calculated using Pmax-heuristic and selecting the heuristic that has provided the highest beam PF metric value.

According to some example versions of the present invention, the performing beam and user scheduling comprises:
selecting a best beam that gives the maximum beam PF metric computed in accordance with the selected heuristic and scheduling the selected users corresponding to the best beam.

Further, the present invention may be implemented by an apparatus for use in a base station comprising means for performing the above-described processing, as shown in Fig. 10.

That is, according to some example versions of the present invention, as shown in Fig. 10, the apparatus for use in a base station comprises

means 101 for computing a maximum number of physical resource blocks, PRBs, that can be assigned to a specific user using a specific beam out of a plurality of users and a plurality of beams, based on a spectral efficiency and a number of bits in a buffer of the base station to be sent to the user;

means 102 for calculating a beam proportional fair, PF, metric and the corresponding beam and users by sorting users based on at least the spectral efficiency and the throughput achieved by the specific user in the past; and

means 103 for performing beam and user scheduling based on information regarding the corresponding beam and users according to a maximum of the beam PF metric.

According to some example versions of the present invention, the computing comprises for each beam n:

estimating the spectral efficiency $R_u(n)$ achievable by each user u in one PRB given that a specific beam n is used;

retrieving the throughput $T_u$ achieved by user u in the recent past and the number of bits $B_u$ in the buffer for each user u; and

computing the maximum number of PRBs $P_u^{max}(n) = \left\lceil \frac{B_u}{R_u(n)} \right\rceil$ that can be assigned to each user u.

According to some example versions of the present invention, for each beam n and for each q value of users starting from 0 to maximum user limit K, sorting users in decreasing order of $R_u(n)/T_u$ and taking the first q of the users,

for each beam n, sorting the remaining users in decreasing order of $P_u^{max}(n)R_u(n)/T_u$ ;

for each beam n, selecting the users in that order until either a sum of the PRBs assigned to each of the selected users exceeds the maximum number of PRBs that can be assigned to the selected users or the user limit K is reached;

for each beam n, for the given q value sorted in decreasing order of PF metric $R_u(n)/T_u$, computing a first beam PF metric which is a sum of a product of the PF metric $R_u(n)/T_u$ and the number of PRBs assigned to each of the selected users;

for each beam n, for the given q value sorted in decreasing order of $P_u^{max}(n)R_u(n)/T_u$ computing a second beam PF metric which is a sum of a product of PF metric $R_u(n)/T_u$ and the number of PRBs assigned to each of the selected users;

computing, for each q value, a final beam PF metric by adding the first and second beam PF metrics;

determining, for each beam, a q value for which the final beam PF metric is the highest; and

determining a beam, for which the final beam PF metric has the highest value.

According to some example versions of the present invention, the performing beam and user scheduling comprises:

selecting a best beam that gives the maximum final beam PF metric and scheduling the selected users corresponding to the best beam.

Additionally, according to some example versions of the present invention, there is provided a computer program product for a computer, including software code portions for, when said product is run on the computer, performing

computing a maximum number of physical resource blocks, PRBs, that can be assigned to a specific user using a specific beam out of a plurality of users and a plurality of beams, based on a spectral efficiency and a number of bits in a buffer of the base station to be sent to the user;

calculating, using RT-heuristic, a maximum value of a first beam proportional fair, PF, metric and the corresponding beam and users by sorting users based on the spectral efficiency and a throughput achieved by the specific user in the past;

calculating, using Pmax-heuristic, a maximum value of a second beam proportional fair, PF, metric and the corresponding beam and users by sorting users based on the maximum number of PRBs that can be assigned to the specific user, the spectral efficiency and the throughput achieved by the specific user in the past;

selecting one of the RT-heuristic or Pmax-heuristic; and

performing beam and user scheduling based on information regarding the corresponding beam and users according to the selected RT-heuristic or Pmax-heuristic.

According to some example versions of the present invention, the computing comprises for each beam n:

estimating the spectral efficiency $R_u(n)$ achievable by each user u in one PRB given that a specific beam n is used;

retrieving the throughput $T_u$ achieved by user u in the recent past and the number of bits $B_u$ in the buffer for each user u; and

computing the maximum number of PRBs $P_u^{max}(n) = \left\lceil \dfrac{B_u}{R_u(n)} \right\rceil$ that can be assigned to each user u.

According to some example versions of the present invention, the calculating using RT-heuristic comprises:

for each beam n , sorting users in decreasing order of PF metric $R_u(n)/T_u$;
for each beam n , selecting the users in that order until either a sum of PRBs assigned to each of the users exceeds the maximum number of PRBs that can be assigned to the selected users or a user limit K is reached;
for each beam n , computing the first beam PF metric which is a sum of a product of the PF metric $R_u(n)/T_u$ and the number of PRBs assigned to each of the selected users; and
determining a beam, for which the first beam PF metric has the highest value, and the users corresponding to that beam.

According to some example versions of the present invention, the calculating using RT-heuristic comprises for each beam n:

sorting users in decreasing order of PF metric $R_u(n)/T_u$ ;

computing, in that order, a user $\overline{x}^{RT}$ such that a cumulative sum of the maximum number of PRBs $P_u^{max}(n)$ for each of the users up to that user is within a predetermined number M of available PRBs and beyond that user exceeds M;
computing a first beam PF metric corresponding to $\overline{x}^{RT}$ as the sum of the product of the PF metric $R_u(n)/T_u$ and the maximum number of PRBs $P_u^{max}(n)$ of the first user to user $\overline{x}^{RT}$ in the sorted order;
computing a first beam PF metric corresponding to $\overline{x}^{RT} + 1$ as the sum of the product of the PF metric $R_u(n)/T_u$ and the assigned number of PPBs $P_u(n)$ of the first user to user $\overline{x}^{RT} + 1$ in the sorted order; and
selecting the highest first beam PF metric between the ones corresponding to $\overline{x}^{RT}$ and $\overline{x}^{RT} + 1$ as the first beam PF metric and selecting the corresponding users.

According to some example versions of the present invention, the calculating using Pmax-heuristic comprises:

for each beam n, sorting users in decreasing order of $P_u^{max}(n)R_u(n)/T_u$ ;
for each beam n, selecting the users in that order until either a sum of PRBs assigned to each of the users exceeds the maximum number of PRBs that can be assigned to the selected users or a user limit K is reached;
for each beam n, computing the second beam PF metric which is a sum of a product of PF metric $R_u(n)/T_u$ and the number of PRBs assigned to each of the selected users; and
determining a beam, for which the second beam PF metric has the highest value, and the users corresponding to that beam.

According to some example versions of the present invention, the selecting comprises:
determining a highest beam PF metric value among the first beam PF metric having the highest value calculated using RT-heuristic and the second beam PF metric having the highest value calculated using Pmax-heuristic and selecting the heuristic that has provided the highest beam PF metric value.
According to some example versions of the present invention, the performing beam and user scheduling comprises:
selecting a best beam that gives the maximum beam PF metric computed in accordance with the selected heuristic and scheduling the selected users corresponding to the best beam.
Additionally, according to some example versions of the present invention, there is provided a computer program product for a computer, including software code portions for, when said product is run on the computer, performing

computing a maximum number of physical resource blocks, PRBs, that can be assigned to a specific user using a specific beam out of a plurality of users and a plurality of beams, based on a spectral efficiency and a number of bits in a buffer of the base station to be sent to the user;
calculating a beam proportional fair, PF, metric and the corresponding beam and users by sorting users based on at least the spectral efficiency and the throughput achieved by the specific user in the past; and

performing beam and user scheduling based on information regarding the corresponding beam and users according to a maximum of the beam PF metric.

According to some example versions of the present invention, the computing comprises for each beam n:

estimating the spectral efficiency $R_u(n)$ achievable by each user u in one PRB given that a specific beam n is used; retrieving the throughput $T_u$ achieved by user *u* in the recent past and the number of bits $B_u$ in the buffer for each user u; and

$$P_u^{max}(n) = \left\lceil \frac{B_u}{R_u(n)} \right\rceil$$

computing the maximum number of PRBs $\quad$ that can be assigned to each user u.

According to some example versions of the present invention, for each beam n and for each q value of users starting from 0 to maximum user limit K, sorting users in decreasing order of $R_u(n)/T_u$ and taking the first q of the users,

for each beam n, sorting the remaining users in decreasing order of $P_u^{max}(n)R_u(n)/T_u$;
for each beam n, selecting the users in that order until either a sum of the PRBs assigned to each of the selected users exceeds the maximum number of PRBs that can be assigned to the selected users or the user limit K is reached;
for each beam n, for the given q value sorted in decreasing order of PF metric $R_u(n)/T_u$, computing a first beam PF metric which is a sum of a product of the PF metric $R_u(n)/T_u$ and the number of PRBs assigned to each of the selected users;

for each beam n, for the given q value sorted in decreasing order of $P_u^{max}(n)R_u(n)/T_u$ computing a second beam PF metric which is a sum of a product of PF metric $R_u(n)/T_u$ and the number of PRBs assigned to each of the selected users;
computing, for each q value, a final beam PF metric by adding the first and second beam PF metrics;
determining, for each beam, a q value for which the final beam PF metric is the highest; and
determining a beam, for which the final beam PF metric has the highest value.

According to some example versions of the present invention, the performing beam and user scheduling comprises:
selecting a best beam that gives the maximum final beam PF metric and scheduling the selected users corresponding to the best beam.

The computer program product may comprise software code portion adapted to produce steps of any of the methods as described above when loaded into the memory of a computer.

According to some example versions of the present invention, there is provided a computer program product as defined above, wherein the computer program product comprises a computer-readable medium on which the software code portions are stored.

According to some example versions of the present invention, there is provided a computer program product as defined above, wherein the computer program product is directly loadable into the internal memory of the computer and/or transmittable via a network by means of at least one of upload, download and push procedures.

According to some example versions of the present invention, there is provided a computer readable medium storing a computer program as set out above.

According to some example versions of the present invention, there is provided a computer program product comprising computer-executable computer program code which, when the program is run on a computer (e.g. a computer of an apparatus according to any one of the aforementioned apparatus-related exemplary aspects of the present disclosure), is configured to cause the computer to carry out the method according to any one of the aforementioned method-related exemplary aspects of the present disclosure.

Such computer program product may comprise (or be embodied) a (tangible) computer-readable (storage) medium or the like on which the computer-executable computer program code is stored, and/or the program may be directly loadable into an internal memory of the computer or a processor thereof.

Furthermore, the present invention may be implement by an apparatus for use in a base station comprising respective circuitry for performing the above-described processing with respect to Figs. 6.

That is, according to some example versions of the present invention, there is provided an apparatus for use in a base station, comprising

computing circuitry for computing a maximum number of physical resource blocks, PRBs, that can be assigned to a specific user using a specific beam out of a plurality of users and a plurality of beams, based on a spectral efficiency and a number of bits in a buffer of the base station to be sent to the user;

calculation circuitry for calculating, using RT-heuristic, a maximum value of a first beam proportional fair, PF, metric and the corresponding beam and users by sorting users based on the spectral efficiency and a throughput achieved by the specific user in the past;

calculation circuitry for calculating, using Pmax-heuristic, a maximum value of a second beam proportional fair, PF, metric and the corresponding beam and users by sorting users based on the maximum number of PRBs that can be assigned to the specific user, the spectral efficiency and the throughput achieved by the specific user in the past;

selection circuitry for selecting one of the RT-heuristic or Pmax-heuristic; and

performing circuitry for performing beam and user scheduling based on information regarding the corresponding beam and users according to the selected RT-heuristic or Pmax-heuristic.

Furthermore, the present invention may be implement by an apparatus for use in a base station comprising respective circuitry for performing the above-described processing with respect to Figs. 7.

That is, according to some example versions of the present invention, there is provided an apparatus for use in a base station, comprising

circuitry for computing a maximum number of physical resource blocks, PRBs, that can be assigned to a specific user using a specific beam out of a plurality of users and a plurality of beams, based on a spectral efficiency and a number of bits in a buffer of the base station to be sent to the user;

calculation circuitry for calculating a beam proportional fair, PF, metric and the corresponding beam and users by sorting users based on at least the spectral efficiency and the throughput achieved by the specific user in the past; and

performing circuitry for performing beam and user scheduling based on information regarding the corresponding beam and users according to a maximum of the beam PF metric.

For further details regarding the functions of the apparatuses and the computer programs, reference is made to the above description of the methods according to some example versions of the present invention, as described in connection with Figs. 6 and 7.

In the foregoing exemplary description of the apparatus, only the units/means that are relevant for understanding the principles of the invention have been described using functional blocks. The apparatus may comprise further units/means that are necessary for its respective operation, respectively.

However, a description of these units/means is omitted in this specification. The arrangement of the functional blocks of the apparatus is not to be construed to limit the invention, and the functions may be performed by one block or further split into sub-blocks.

When in the foregoing description it is stated that the apparatus (or some other means) is configured to perform some function, this is to be construed to be equivalent to a description stating that a (i.e. at least one) processor or corresponding circuitry, potentially in cooperation with computer program code stored in the memory of the respective apparatus, is configured to cause the apparatus to perform at least the thus mentioned function. Also, such function is to be construed to be equivalently implementable by specifically configured circuitry or means for performing the respective function (i.e. the expression "unit configured to" is to be construed to be equivalent to an expression such as "means for").

As used in this application, the term "circuitry" may refer to one or more or all of the following:

(a) hardware-only circuit implementations (such as implementations in only analog and/or digital circuitry) and
(b) combinations of hardware circuits and software, such as (as applicable):

(i) a combination of analog and/or digital hardware circuit(s) with software/firmware
and
(ii) any portions of hardware processor(s) with software (including digital signal processor(s)), software, and memory(ies) that work together to cause an apparatus, such as a mobile phone or server, to perform various functions) and

(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

For the purpose of the present invention as described herein above, it should be noted that

- method steps likely to be implemented as software code portions and being run using a processor at an apparatus (as examples of devices, apparatuses and/or modules thereof, or as examples of entities including apparatuses and/or modules therefore), are software code independent and can be specified using any known or future developed programming language as long as the functionality defined by the method steps is preserved;
- generally, any method step is suitable to be implemented as software or by hardware without changing the idea of the aspects/embodiments and its modification in terms of the functionality implemented;
- method steps and/or devices, units or means likely to be implemented as hardware components at the above-defined apparatuses, or any module(s) thereof, (e.g., devices carrying out the functions of the apparatuses according to the aspects/embodiments as described above) are hardware independent and can be implemented using any known or future developed hardware technology or any hybrids of these, such as MOS (Metal Oxide Semiconductor), CMOS (Complementary MOS), BiMOS (Bipolar MOS), BiCMOS (Bipolar CMOS), ECL (Emitter Coupled Logic), TTL (Transistor-Transistor Logic), etc., using for example ASIC (Application Specific IC (Integrated Circuit)) components, FPGA (Field-programmable Gate Arrays) components, CPLD (Complex Programmable Logic Device) components, APU (Accelerated Processor Unit), GPU (Graphics Processor Unit) or DSP (Digital Signal Processor) components;
- devices, units or means (e.g. the above-defined apparatuses, or any one of their respective units/means) can be implemented as individual devices, units or means, but this does not exclude that they are implemented in a distributed fashion throughout the system, as long as the functionality of the device, unit or means is preserved;
- an apparatus may be represented by a semiconductor chip, a chipset, or a (hardware) module comprising such chip or chipset; this, however, does not exclude the possibility that a functionality of an apparatus or module, instead of being hardware implemented, be implemented as software in a (software) module such as a computer program or a computer program product comprising executable software code portions for execution/being run on a processor;
- a device may be regarded as an apparatus or as an assembly of more than one apparatus, whether functionally in cooperation with each other or functionally independently of each other but in a same device housing, for example.

In general, it is to be noted that respective functional blocks or elements according to above-described aspects can be implemented by any known means, either in hardware and/or software, respectively, if it is only adapted to perform the described functions of the respective parts. The mentioned method steps can be realized in individual functional blocks or by individual devices, or one or more of the method steps can be realized in a single functional block or by a single device.

Generally, any method step is suitable to be implemented as software or by hardware without changing the idea of the present invention. Devices and means can be implemented as individual devices, but this does not exclude that they are implemented in a distributed fashion throughout the system, as long as the functionality of the device is preserved. Such and similar principles are to be considered as known to a skilled person.

Software in the sense of the present description comprises software code as such comprising code means or portions or a computer program or a computer program product for performing the respective functions, as well as software (or a computer program or a computer program product) embodied on a tangible medium such as a computer-readable (storage) medium having stored thereon a respective data structure or code means/portions or embodied in a signal or in a chip, potentially during processing thereof.

It is to be noted that the aspects/embodiments and general and specific examples described above are provided for illustrative purposes only and are in no way intended that the present invention is restricted thereto. Rather, it is the intention that all variations and modifications which fall within the scope of the appended claims are covered.

**Claims**

1.  An apparatus for use in a base station, comprising:

    at least one processor; and
    at least one memory storing instructions that, when executed by the at least one processor, cause the apparatus at least to perform:

    computing a maximum number of physical resource blocks, PRBs, that can be assigned to a specific user using a specific beam out of a plurality of users and a plurality of beams, based on a spectral efficiency and a number of bits in a buffer of the base station to be sent to the user;

calculating, using RT-heuristic, a maximum value of a first beam proportional fair, PF, metric and the corresponding beam and users by sorting users based on the spectral efficiency and a throughput achieved by the specific user in the past;

calculating, using Pmax-heuristic, a maximum value of a second beam proportional fair, PF, metric and the corresponding beam and users by sorting users based on the maximum number of PRBs that can be assigned to the specific user, the spectral efficiency and the throughput achieved by the specific user in the past;

selecting one of the RT-heuristic or Pmax-heuristic; and

performing beam and user scheduling based on information regarding the corresponding beam and users according to the selected RT-heuristic or Pmax-heuristic.

2. The apparatus according to claim 1, wherein
the computing comprises for each beam n:

estimating the spectral efficiency $R_u(n)$ achievable by each user u in one PRB given that a specific beam n is used;

retrieving the throughput $T_u$ achieved by user *u* in the recent past and the number of bits $B_u$ in the buffer for each user u; and

computing the maximum number of PRBs $$P_u^{max}(n) = \left\lceil \frac{B_u}{R_u(n)} \right\rceil$$ that can be assigned to each user u.

3. The apparatus according to claim 1 or 2, wherein
the calculating using RT-heuristic comprises:

for each beam n , sorting users in decreasing order of PF metric $R_u(n)/T_u$;

for each beam n , selecting the users in that order until either a sum of PRBs assigned to each of the users exceeds the maximum number of PRBs that can be assigned to the selected users or a user limit K is reached;

for each beam n , computing the first beam PF metric which is a sum of a product of the PF metric $R_u(n)/T_u$ and the number of PRBs assigned to each of the selected users; and

determining a beam, for which the first beam PF metric has the highest value, and the users corresponding to that beam.

4. The apparatus according to claim 1 or 2, wherein
the calculating using RT-heuristic comprises for each beam n:

sorting users in decreasing order of PF metric $R_u(n)/T_u$ ;

computing, in that order, a user $\overline{x}^{RT}$ such that a cumulative sum of the maximum number of PRBs $P_u^{max}(n)$ for each of the users up to that user is within a predetermined number M of available PRBs and beyond that user exceeds M;

computing a first beam PF metric corresponding to $\overline{x}^{RT}$ as the sum of the product of the PF metric $R_u(n)/T_u$ and the maximum number of PRBs $P_u^{max}(n)$ of the first user to user $\overline{x}^{RT}$ in the sorted order;

computing a first beam PF metric corresponding to $\overline{x}^{RT}+1$ as the sum of the product of the PF metric $R_u(n)/T_u$ and the assigned number of PPBs $P_u(n)$ of the first user to user $\overline{x}^{RT}+1$ in the sorted order; and

selecting the highest first beam PF metric between the ones corresponding to $\overline{x}^{RT}$ and $\overline{x}^{RT}+1$ as the first beam PF metric and selecting the corresponding users.

5. The apparatus according to any one of claims 1 to 4, wherein
the calculating using Pmax-heuristic comprises:

for each beam n, sorting users in decreasing order of $P_u^{max}(n)R_u(n)/T_u$ ;

for each beam n, selecting the users in that order until either a sum of PRBs assigned to each of the users exceeds the maximum number of PRBs that can be assigned to the selected users or a user limit K is reached;

for each beam n, computing the second beam PF metric which is a sum of a product of PF metric $R_u(n)/T_u$ and the number of PRBs assigned to each of the selected users; and

determining a beam, for which the second beam PF metric has the highest value, and the users corresponding to that beam.

6. The apparatus according to any one of claims 1 to 5, wherein
the selecting comprises:

determining a highest beam PF metric value among the first beam PF metric having the highest value calculated using RT-heuristic and the second beam PF metric having the highest value calculated using Pmax-heuristic and selecting the heuristic that has provided the highest beam PF metric value.

7. The apparatus according to any one of claims 1 to 6, wherein
the performing beam and user scheduling comprises:

selecting a best beam that gives the maximum beam PF metric computed in accordance with the selected heuristic and scheduling the selected users corresponding to the best beam.

8. An apparatus for use in a base station, comprising:

at least one processor; and
at least one memory storing instructions that, when executed by the at least one processor, cause the apparatus at least to perform:

computing a maximum number of physical resource blocks, PRBs, that can be assigned to a specific user using a specific beam out of a plurality of users and a plurality of beams, based on a spectral efficiency and a number of bits in a buffer of the base station to be sent to the user;
calculating a beam proportional fair, PF, metric and the corresponding beam and users by sorting users based on at least the spectral efficiency and the throughput achieved by the specific user in the past; and
performing beam and user scheduling based on information regarding the corresponding beam and users according to a maximum of the beam PF metric.

9. The apparatus according to claim 8, wherein
the computing comprises for each beam n:

estimating the spectral efficiency $R_u(n)$ achievable by each user u in one PRB given that a specific beam n is used;
retrieving the throughput $T_u$ achieved by user u in the recent past and the number of bits $B_u$ in the buffer for each user u; and

computing the maximum number of PRBs $P_u^{max}(n) = \left\lceil \frac{B_u}{R_u(n)} \right\rceil$ that can be assigned to each user u.

10. The apparatus according to claim 8 or 9, wherein the calculating comprises:

for each beam n and for each q value of users starting from 0 to maximum user limit K, sorting users in decreasing order of $R_u(n)/T_u$ and taking the first q of the users,

for each beam n, sorting the remaining users in decreasing order of $P_u^{max}(n)R_u(n)/T_u$;
for each beam n, selecting the users in that order until either a sum of the PRBs assigned to each of the selected users exceeds the maximum number of PRBs that can be assigned to the selected users or the user limit K is reached;
for each beam n, for the given q value sorted in decreasing order of PF metric $R_u(n)/T_u$, computing a first beam PF metric which is a sum of a product of the PF metric $R_u(n)/T_u$ and the number of PRBs assigned to each of the selected users;

for each beam n, for the given q value sorted in decreasing order of $P_u^{max}(n)R_u(n)/T_u$ computing a second beam PF metric which is a sum of a product of PF metric $R_u(n)/T_u$ and the number of PRBs assigned to each of the selected users;
computing, for each q value, a final beam PF metric by adding the first and second beam PF metrics;
determining, for each beam, a q value for which the final beam PF metric is the highest; and
determining a beam, for which the final beam PF metric has the highest value.

**11.** The apparatus according to anyone of claims 8 to 10, wherein
the performing beam and user scheduling comprises:

selecting a best beam that gives the maximum final beam PF metric and scheduling the selected users corresponding to the best beam.

**12.** An method for use in a base station, comprising:

computing a maximum number of physical resource blocks, PRBs, that can be assigned to a specific user using a specific beam out of a plurality of users and a plurality of beams, based on a spectral efficiency and a number of bits in a buffer of the base station to be sent to the user;
calculating, using RT-heuristic, a maximum value of a first beam proportional fair, PF, metric and the corresponding beam and users by sorting users based on the spectral efficiency and a throughput achieved by the specific user in the past;
calculating, using Pmax-heuristic, a maximum value of a second beam proportional fair, PF, metric and the corresponding beam and users by sorting users based on the maximum number of PRBs that can be assigned to the specific user, the spectral efficiency and the throughput achieved by the specific user in the past;
selecting one of the RT-heuristic or Pmax-heuristic; and
performing beam and user scheduling based on information regarding the corresponding beam and users according to the selected RT-heuristic or Pmax-heuristic.

**13.** The method according to claim 12, wherein
the calculating using RT-heuristic comprises for each beam n:

sorting users in decreasing order of PF metric $R_u(n)/T_u$ ;

computing, in that order, a user $\overline{x}^{RT}$ such that a cumulative sum of the maximum number of PRBs $P_u^{max}(n)$ for each of the users up to that user is within a predetermined number M of available PRBs and beyond that user exceeds M;
computing a first beam PF metric corresponding to $\overline{x}^{RT}$ as the sum of the product of the PF metric $R_u(n)/T_u$ and the

maximum number of PRBs $P_u^{max}(n)$ of the first user to user $\overline{x}^{RT}$ in the sorted order;
computing a first beam PF metric corresponding to $\overline{x}^{RT}+1$ as the sum of the product of the PF metric $R_u(n)/T_u$ and the assigned number of PPBs $P_u(n)$ of the first user to user $\overline{x}^{RT}+1$ in the sorted order; and
selecting the highest first beam PF metric between the ones corresponding to $\overline{x}^{RT}$ and $\overline{x}^{RT}+1$ as the first beam PF metric and selecting the corresponding users.

**14.** The method according to claim 12 or 13, wherein
the calculating using Pmax-heuristic comprises:

for each beam n, sorting users in decreasing order of $P_u^{max}(n)R_u(n)/T_u$ ;
for each beam n, selecting the users in that order until either a sum of PRBs assigned to each of the users exceeds the maximum number of PRBs that can be assigned to the selected users or a user limit K is reached;
for each beam n, computing the second beam PF metric which is a sum of a product of PF metric $R_u(n)/T_u$ and the number of PRBs assigned to each of the selected users; and
determining a beam, for which the second beam PF metric has the highest value, and the users corresponding to that beam.

**15.** The method according to any one of claims 12 to 14, wherein
the selecting comprises:

determining a highest beam PF metric value among the first beam PF metric having the highest value calculated using RT-heuristic and the second beam PF metric having the highest value calculated using Pmax-heuristic and selecting the heuristic that has provided the highest beam PF metric value.

**16.** An method for use in a base station, comprising:

computing a maximum number of physical resource blocks, PRBs, that can be assigned to a specific user using a specific beam out of a plurality of users and a plurality of beams, based on a spectral efficiency and a number of bits in a buffer of the base station to be sent to the user;
calculating a beam proportional fair, PF, metric and the corresponding beam and users by sorting users based on at least the spectral efficiency and the throughput achieved by the specific user in the past; and
performing beam and user scheduling based on information regarding the corresponding beam and users according to a maximum of the beam PF metric.

17. The method according to claim 16, wherein the calculating comprises:

for each beam n and for each q value of users starting from 0 to maximum user limit K, sorting users in decreasing order of $R_u(n)/T_u$ and taking the first q of the users,

for each beam n, sorting the remaining users in decreasing order of $P_u^{max}(n)R_u(n)/T_u$ ;

for each beam n, selecting the users in that order until either a sum of the PRBs assigned to each of the selected users exceeds the maximum number of PRBs that can be assigned to the selected users or the user limit K is reached;

for each beam n, for the given q value sorted in decreasing order of PF metric $R_u(n)/T_u$, computing a first beam PF metric which is a sum of a product of the PF metric $R_u(n)/T_u$ and the number of PRBs assigned to each of the selected users;

for each beam n, for the given q value sorted in decreasing order of $P_u^{max}(n)R_u(n)/T_u$ computing a second beam PF metric which is a sum of a product of PF metric $R_u(n)/T_u$ and the number of PRBs assigned to each of the selected users;

computing, for each q value, a final beam PF metric by adding the first and second beam PF metrics;
determining, for each beam, a q value for which the final beam PF metric is the highest; and
determining a beam, for which the final beam PF metric has the highest value.

18. A computer program product for a computer, including software code portions for performing the steps of any of claims 12 to 17, when said product is run on the computer.

19. The computer program product according to claim 18, wherein

the computer program product includes a computer-readable medium on which said software code portions are stored, and/or
the computer program product is directly loadable into the internal memory of the computer and/or transmittable via a network by means of at least one of upload, download and push procedures.

Fig. 1

CDF for distribution of users in elevation domain

Elevation angle

Fig. 2

Fig. 3

Fig. 4

| | |
|---|---|
| Computation | S41 |
| RT-heuristic | S42 |
| Pmax-heuristic | S43 |
| Heuristic selection | S44 |
| Beam/user scheduling | S45 |

New time slot

Fig. 5

# Fig. 6

| | S61 |

computing a maximum number of physical resource blocks, PRBs, that can be assigned to a specific user using a specific beam out of a plurality of users and a plurality of beams, based on a spectral efficiency and a number of bits in a buffer of the base station to be sent to the user

↓ S62

calculating, using RT-heuristic, a maximum value of a first beam proportional fair, PF, metric and the corresponding beam and users by sorting users based on the spectral efficiency and a throughput achieved by the specific user in the past

↓ S63

calculating, using Pmax-heuristic, a maximum value of a second beam proportional fair, PF, metric and the corresponding beam and users by sorting users based on the maximum number of PRBs that can be assigned to the specific user, the spectral efficiency and the throughput achieved by the specific user in the past

↓ S64

selecting one of the RT-heuristic or Pmax-heuristic

↓ S65

performing beam and user scheduling based on information regarding the corresponding beam and users according to the selected RT-heuristic or Pmax-heuristic

# Fig. 7

computing a maximum number of physical resource blocks, PRBs, that can be assigned to a specific user using a specific beam out of a plurality of users and a plurality of beams, based on a spectral efficiency and a number of bits in a buffer of the base station to be sent to the user — S71

calculating a beam proportional fair, PF, metric and the corresponding beam and users by sorting users based on at least the spectral efficiency and the throughput achieved by the specific user in the past — S72

performing beam and user scheduling based on information regarding the corresponding beam and users according to a maximum of the beam PF metric — S73

EP 4 521 652 A1

Fig. 8

Apparatus 80

PROCESSOR/CONTROLLER: 81

MEMORY 83

I/O 82

TO/FROM other network elements, entities and the like,....

Fig. 10

| 101 |
|-----|
| 102 |
| 103 |

Fig. 9

| 91 |
|----|
| 92 |
| 93 |
| 94 |
| 95 |

**EUROPEAN SEARCH REPORT**

Europäisches Patentamt

European Patent Office

Office européen des brevets

Application Number

**EP 23 19 5996**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | XUE QIULIN ET AL: "Beam Selection for Cell-free Millimeter-Wave Massive MIMO Systems", 2021 26TH IEEE ASIA-PACIFIC CONFERENCE ON COMMUNICATIONS (APCC), IEEE, 11 October 2021 (2021-10-11), pages 310-315, XP034026028, DOI: 10.1109/APCC49754.2021.9609844 [retrieved on 2021-11-08] * Subsection III.B p313; figures 1,2 * | 1-19 | INV. H04B7/06 H04W72/50 H04W72/543 |
| | | | TECHNICAL FIELDS SEARCHED (IPC) |
| | | | H04B H04W |

The present search report has been drawn up for all claims

| Place of search | Date of completion of the search | Examiner |
|---|---|---|
| Munich | 16 February 2024 | Tanco Sánchez, Mario |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)